(19) Europäisches Patentamt
European Patent Office
Office européen des brevets

(11) EP 2 706 330 A1

(12) EUROPÄISCHE PATENTANMELDUNG

(43) Veröffentlichungstag:
12.03.2014 Patentblatt 2014/11

(51) Int Cl.:
G01J 5/00 (2006.01)   G01J 5/02 (2006.01)
G01J 5/04 (2006.01)   G01J 5/08 (2006.01)
G01J 5/06 (2006.01)

(21) Anmeldenummer: 13175114.1

(22) Anmeldetag: 04.07.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 05.09.2012 DE 102012215690

(71) Anmelder: Robert Bosch GmbH
70442 Stuttgart (DE)
(72) Erfinder:
• Frank, Michael
  75015 Bretten (DE)
• Uhlig, Mike
  70178 Stuttgart (DE)
• Meyer, Patrick
  70771 Leinfelden-Echterdingen (DE)
• Babkina, Tatiana
  72072 Tuebingen (DE)

(54) **Temperaturmessgerät, sowie Verfahren zur Temperaturmessung**

(57)      Die Erfindung betrifft ein Messgerät zur berührungslosen Temperaturmessung eines Objektes, mit einem Gerätegehäuse (12), und einem im Gerätegehäuse (12) angeordneten Infrarotsensor (32) zur berührungslosen Temperaturmessung, sowie mit einem zusätzlichen Umgebungstemperatursensor (30) zur Bestimmung der Umgebungstemperatur Tu des Messgerätes, bei dem zumindest ein weiterer Temperatursensor (34) im Gerätegehäuse (12) des Messgerätes angeordnet.

Darüber hinaus betrifft die Erfindung ein Verfahren zur berührungslosen Temperaturmessung, bei dem mittels eines IR-Sensors (32) berührungslos eine Objekttemperatur $T_{Ob}$ bestimmt wird, wobei über einen weiteren Temperatursensor (34) die Temperatur Ts des IR-Sensors (32) detektiert wird, erfindungsgemäß wird vorgeschlagen, dass ein dritter Temperatursensor eine Umgebungstemperatur Tu misst.

Fig. 1

**Beschreibung**

Die Erfindung betrifft ein Messgerät zur berührungslosen Temperaturmessung, insbesondere ein handgehaltenes Infrarottemperaturmessgerät, sowie ein Verfahren zur berührungslosen Messung einer Objekttemperatur.

Stand der Technik

Berührungslose Temperaturmessgeräte sind seit längerer Zeit bekannt. Eine Klasse diese Geräte wird gebildet durch die sogenannten Infrarottemperaturmessgeräte. Derartige Messgeräte, auch Strahlungsthermometer oder Pyrometer genannt, detektieren die von einem Objekt emittierte Wärmestrahlung, deren Intensität und Lage des Emissionsmaximums von seiner Temperatur abhängt. Durch eine Messung dieser Größen kann auf die Temperatur es emittierenden Objektes geschlossen werden.

Bekannt sind Pyrometer die mittels IR-Linse und einem Thermopile Infrarotstrahlung von Objekten messen und somit deren Oberflächentemperatur bestimmen können. Aus der DE 20 2005 015 397 U1 ist ein derartiges handgehaltenes Strahlungsthermometer bekannt. Eine Schwierigkeit solcher Messsysteme liegt darin, dass die Messsensorik wiederum temperaturempfindlich ist.

Der Erfindung liegt die Aufgabe zugrunde, ein Verfahren zur berührungslosen Temperaturmessung zur Verfügung zu stellen, welches Fehlmessungen vermeidet und eine möglichst genaue Messung gewährleistet.

Darüber hinaus ist es Aufgabe der vorliegenden Erfindung ein entsprechendes Messgerät bereitzustellen.

Offenbarung der Erfindung

Die Erfindung löst das zugrundeliegende Problem durch ein Messgerät nach Anspruch 1 gelöst. Darüber hinaus wird die erfindungsgemäße Aufgabe mittels eines Verfahrens mit den Merkmalen des Anspruchs 10 gelöst. Unteransprüche geben dabei vorteilhafte und/oder bevorzugte Ausführungsformen des erfindungsgemäßen Verfahrens bzw. des erfindungsgemäßen Messgerätes wieder.

Bei aktuell erhältlichen handgehaltenen IR-Messgeräten besteht die Gefahr von Fehlmessungen, wenn diese beispielsweise nicht angemessen akklimatisiert sind und der Anwender auf diese Gefahr auch nicht hingewiesen wird. Eine vollständige Akklimatisierung des Gerätes ist erst gegeben, sobald die Temperaturen aller für die IR-Temperaturmessung relevanten Komponenten des IR-Messgerätes der Umgebungstemperatur entsprechen.

Wird das Messgerät beispielsweise in einen Raum gebracht, dessen Temperatur ($T_2$) von der Temperatur des Gerätes ($T_1$) abweicht, ist eine Akklimatisation nicht gegeben. Je größer die Differenz der beiden Temperaturen ($T_1$ zu $T_2$) ist, desto größer ist die Möglichkeit der Fehlmessung bei der Temperaturbestimmung eines Objektes im Raum, wie beispielsweise einer Wand. Wird dem Messgerät ausreichend Zeit gegeben, kann sich die Gerätetemperatur $T_1$ an die Raumtemperatur $T_2$ angleichen. Bei $T_1 = T_2$ ist das Gerät akklimatisiert. Durch nicht hinreichendes Warten/Akklimatisieren besteht daher die große Gefahr von Fehlmessungen.

Erfindungsgemäß sind im vorgeschlagenen Messgerät Mittel vorhanden, die es ermöglichen, eine Abweichung von $T_1$ zu $T_2$ ( - d.h. das Messgerät ist nicht akklimatisiert - ) zu detektieren.

Das erfindungsgemäße Messgerät zur berührungslosen Temperaturmessung, welches einen im Gerätegehäuse angeordneten Infrarotsensor zur berührungslosen Temperaturmessung eines Objektes besitzt, weist zudem einem zusätzlichen Umgebungstemperatursensor zur Bestimmung der Umgebungstemperatur Tu des Messgeräte, sowie einen weiteren Temperatursensor auf, der dazu vorgesehen ist, die Temperatur des Infrarotsensors zu bestimmen.

Unter einer Umgebungstemperatur wird dabei insbesondere die das Messgerät umgebende Temperatur, also beispielsweise die Temperatur im Bereich des Messgerätes verstanden. Wird das Messgerät in einem geschlossenen Raum verwendet, so entspricht die Umgebungstemperatur der Raumtemperatur. Wird das Messgerät beispielsweise auf freiem Feld benutzt, so wäre die Umgebungstemperatur die Außentemperatur im Bereich des Messgerätes.

Der Umgebungstemperatursensor ist dabei vorteilhaft in einem Extra-Gehäuse des Messgerätes angeordnet, welches beispielsweise aber in die Gehäusekontur des Messgerätegehäuses integriert ist, so dass keinerlei hervorstehende Ecken oder kanten bei einem Fall oder Stoß des Messgerätes aufgrund ihrer exponierten Position beschädigt werden können. Vorteilhafter Weise ist das Extra-Gehäuse des Umgebungstemperatursensors an zumindest drei Seiten, insbesondere an vier Seiten, von dem Geräte-Gehäuse des Messgerätes umgeben. Vorteilhafter Weise sind bei dem Messgerät Mittel vorgesehen, die es gewährleisten, dass das Extra-Gehäuse vom Gehäuse der Vorrichtung thermisch entkoppelt ist.

So kann zur thermischen Entkopplung das Extragehäuse für den zusätzlichen Umgebungstemperatursensor über kleine Stege bzw. Beinchen mit dem Hauptgehäuse des Messgerätes verbunden sein. Die Stege zur Befestigung des Extra-Gehäuses im Gerätegehäuse können einstückig mit dem Extra-Gehäuse verbunden sind. Alternativerweise können die Stege zur Befestigung des Extra-Gehäuses im Gerätegehäuse einstückig mit dem Geräte-Gehäuse verbunden sind.

Vorteilhaft ist es auch, wenn das Material des Extra-Gehäuses des Umgebungstemperatursensors unterschiedlich zum Material des Gerätegehäuses ausgebildet ist. So kann das Extra-Gehäuse beispielsweise als ein Metallgehäuse ausgebildet sein.

Vorteilhaft ist es auch, dass Extra-Gehäuse des Umgebungstemperatursensors weitgehend offen auszugestalten, um einen möglichst hohen thermischen Kontakt der Umgebungsluft mit dem Sensor zu ermöglichen.

Erfindungsgemäß ist zudem zumindest ein weiterer Temperatursensor im Messgerät vorgesehen.

Der erfindungsgemäß vorgesehene, zumindest eine weitere Temperatursensor zur Sensierung der Temperatur des Infrarotsensors ist vorteilhafterweise in unmittelbarer Nähe des Infrarotsensors angebracht und ermöglicht es, die Temperatur des Infrarotsensors zu bestimmen.

Unter *"in unmittelbarer Nähe"* soll im Rahmen dieser Anmeldung ein Abstand verstanden werden, der es dem weiteren Temperatursensor ermöglicht, die im Bereich des Infrarotsensors vorherrschende und auf den Infrarotsensor einwirkende Temperatur zu messen. Ein solcher Bereich liegt typischerweise innerhalb von 10 mm, bevorzugt innerhalb von 5 mm, um den Infrarotsensor herum. Besonders vorteilhaft ist es, wenn der zusätzliche Temperatursensor direkt am Infrarotsensor bzw. dessen Gehäuse anliegt, oder in diesem untergebracht ist. Auch dies ist selbstverständlich unter dem Merkmal *"in unmittelbarer Nähe"* zu verstehen.

Vorteilhafter Weise ist daher der eine weitere Temperatursensor ein Kontakttemperatursensor, der im direkten oder indirekten Kontakt mit dem Gehäuse des Infrarotsensors steht.

Der eine weitere Temperatursensor und der Infrarotsensor können dabei in vorteilhafter Weise in oder an einem gemeinsamen Gehäuse innerhalb des Messgerätegehäuses angeordnet sein. Dies kann beispielweise auch ein optischer Tubus zur Strahlführung bzw. Begrenzung der Infrarotmessstrahlung sein. Ein solcher Tubus kann vorteilhafter Weise aus einem Metall, beispielsweise Aluminium gefertigt sein und stellt dann eine nicht zu vernachlässigende thermische Masse dar. Zur thermischen Stabilisierung kann der erfindungsgemäß verwendete Infrarot-Sensor mechanisch an einen solchen Tubus in Form eines Hohlzylinders gekoppelt sein. Dies ermöglicht es, die Umgebungstemperatur des Infrarotsensors möglichst konstant zu halten.

Der Infrarotsensor selbst kann beispielsweise als ein Thermopiledetektor ausgebildet sein. Andere Infrarotdetektoren sind im Rahmen der aber ebenso möglich.

Das erfindungsgemäße Messgerät weist zudem Mittel auf, die es ermöglichen, eine Temperaturdifferenz $\Delta T$ ($\Delta T = T_s - T_u$) zwischen dem mindestens einen weiteren Temperatursensor und dem Umgebungstemperatursensor, zu detektieren.

Dazu können die Temperatursensoren mit einer oder mehrere Rechen- bzw. Auswerteeinheiten mechanisch und/oder elektrisch verbunden sein, die die sensierten Temperaturwerte sammeln, ggfls. speichern und weiter verarbeiten.

Auf vorteilhafte Weise kann das erfindungsgemäße Messgerät bzw. das zugrundeliegende Verfahren somit feststellen, ob das Gerät bereits *"akklimatisiert"* ist. Ein Gerät ist akklimatisiert, wenn das gesamte Messsystem auf einemTemperaturpotenzial liegt, insbesondere also die Temperatur des Infrarotsensors $T_s$ demnach gleich der Umgebungstemperatur Tu ist. Dies bedeutet, alle relevanten Komponenten (Linse, Tubus, IR-Gehäuse) des Messgerätes haben das gleiche thermische Potenzial Unter dem Begriff der *"Akklimatisierung"* soll hierbei insbesondere der Vorgang zur Erreichung des Temperaurgleichgewichtes verstanden werden.

In vorteilhafter Weise ermöglichen es diese Mittel auch, ein von der Temperaturdifferenz $\Delta T$ abhängiges Signal zu erzeugen, welches beispielsweise über Ausgabemittel des Messgerätes optisch und/oder akustisch als Hinweissignal für einen Anwender ausgegeben werden können.

So kann das erfindungsgemäße Messgerät beispielsweise eine oder mehrere LEDs aufweisen und/oder auch ein LCD besitzen, welche über eine Rechen- bzw. Auswerteeinheit, insbesondere die zentrale Rechen- bzw. Auswerteinheit des Messgerätes, die Ausgabe eines solchen Hinweise über das Vorliegen einer Temperaturdifferenz ermöglicht.

Das erfindungsgemäße Verfahren detektiert eine solche Temperaturabweichung ($\Delta T = T_s - T_u$) zwischen dem Sensor zur berührungslosen Temperaturmessung und dem Umgebungstemperatursensor und kann damit beispielsweise einem Anwender einen Hinweis geben, dass die Gefahr von Fehlmessungen besteht bzw. selbständig eine Korrektur des Messwertes für die Temperaturmessung vornehmen.

Das erfindungsgemäße Verfahren zur berührungslosen Temperaturmessung umfasst damit zumindest die folgenden Schritte:

*Messen einer Objekttemperatur $T_{Ob}$ mittels eines berührungslosen Temperatursensors, insbesondere mittels eines IR-Temperatursensors, besonders vorteilhaft mittels eines Thermopiles,*

*Messen der Temperatur $T_s$ des berührungslosen Temperatursensors, mittels eines weiteren Temperatursensors, insbesondere eines Kontakttemperatursensors,*

*Messen einer Umgebungstemperatur $T_U$ mittels eines Umgebungstemperatursensors.*

Vorteilhafter Weise kann das erfindungsgemäße Verfahren die Temperaturdifferenz $\Delta T = T_S - T_U$ zwischen der Temperatur $T_S$ des berührungslosen Temperatursensors und der Umgebungstemperatur $T_U$ berechnen.

In einer vorteilhaften Ausführungsform des erfindungsgemäßen Verfahren wird eine Korrektur der mittels des berührungslosen Temperatursensors bestimmten Objekttemperatur $T_{Ob}$ in Abhängigkeit von der Temperaturdifferenz $\Delta T = T_S - T_U$ zwischen der Temperatur $T_S$ des berührungslosen Temperatursensors und der Umgebungstemperatur $T_U$ vorgenommen.

Der so ermittelte und korrigierte Temperaturmesswert $T'_{Ob}$ kann über ein entsprechendes Ausgabemittel einem Anwender zur Kenntnis gebracht.

Alternativ kann bei einer Temperaturdifferenz $\Delta T = T_S - T_U$ zwischen der Temperatur $T_S$ des berührungslosen Temperatursensors und der Umgebungstemperatur $T_U$ ein Hinweissignal, insbesondere ein optisches oder akustische Hinweissignal gegeben werden, um einen Anwender von einer möglichen Fehlmessung in Kenntnis zu setzen. Ein solches Hinweissignal kann beispielsweise auch über eine LED Anzeige oder auch eine farbliche Änderung eines Displays gegeben werden.

Auch ist es möglich, im Falle eines zu großen Temperaturunterschiedes $\Delta T = T_S - T_U$ keinen Messwert für die Temperatur des zu messenden Objektes auszugeben, sondern einen entsprechend Hinweise, dass eine weitere Akklimatisierung des Messgerätes erforderlich ist. Auch kann beispielsweise eine extrapolierte Zeitangabe ausgegeben werden, die einen Anwender darüber informiert, wie lange es (voraussichtlich) noch dauern wird, bis die Temperaturdifferenz einen Grenzwert unterschritten hat und das Messsystem dann wieder einsatzbereit ist.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

Kurze Beschreibung der Figuren

Im Folgenden wird die Erfindung mit Bezug auf die beigefügten Figuren genauer beschrieben. Dabei werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.

Es zeigen:

Fig. 1    eine perspektivische Übersichtsdarstellung eines Messgerät zur Durchführung des erfindungsgemäßen Verfahrens,

Fig. 2    eine Detailansicht des Messgerätes gemäß Figur 1 im Bereich des Umgebungstemperatursensors,

Fig. 3    eine Innenansicht eines Teils des Messgerätes gemäß Figur 1,

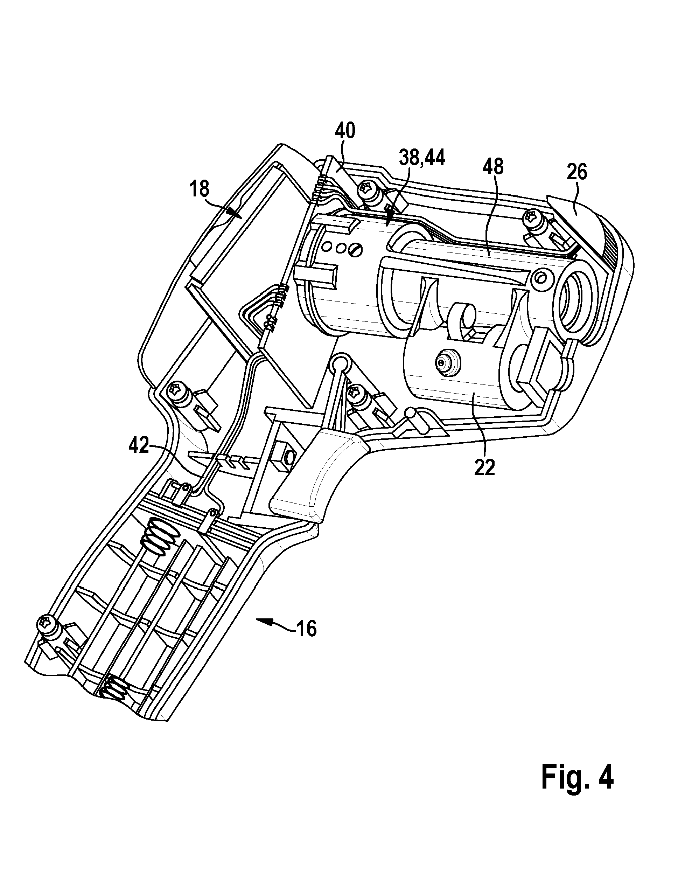

Fig. 4    eine Innenansicht des Messgerätes gemäß Figur 3 mit eingesetztem Tubus, Optikhalterung und Umgebungstemperatursensorgehäuse,

Fig. 5    eine Detailansicht des auf einer Leiterplatte angebrachten Tubus inklusive Optikträger.

Beschreibung eines Ausführungsbeispiels

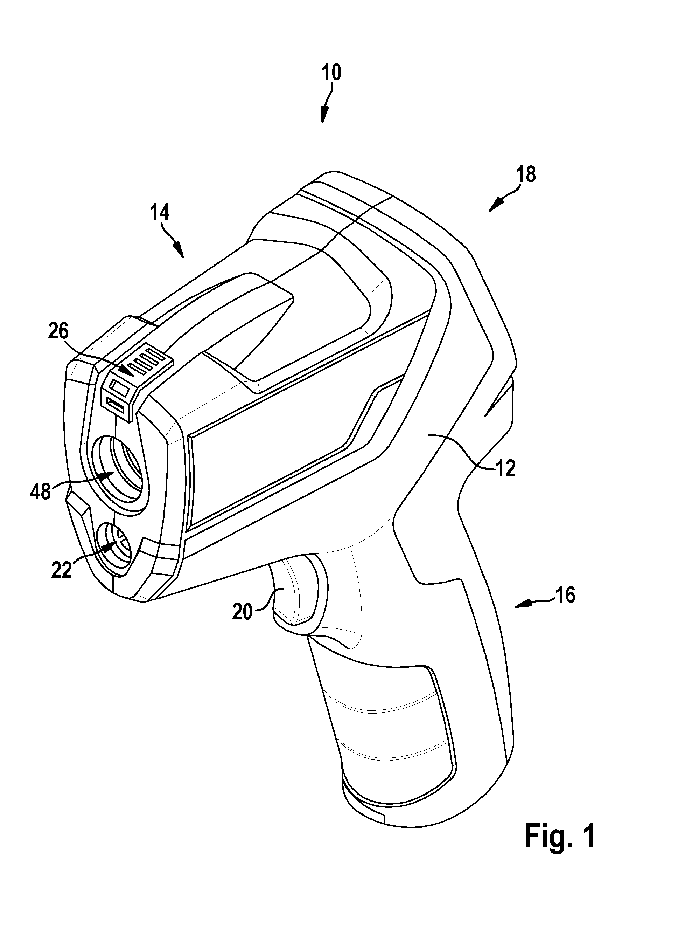

Figur 1 zeigt das erfindungsgemäße Messgerät 10 in einer perspektivischen Übersichtsdarstellung.

Das erfindungsgemäße Messgerät 10 gemäß Figur 1 ist als ein handgehaltenes Messgerät ausgestaltet und besitzt ein Gerätegehäuse 12 mit einem Messkopf 14 sowie einen Griffbereich 16. Am Griffbereich 10 ist ein Messschalter 20 ausgebildet, mit dem eine Temperaturmessung gestartet werden kann.

Gleichzeitig mit der eigentlichen Temperaturmessung oder auch dieser vorgeschaltet kann ein optisch sichtbares Signal, beispielsweise eine Lasermarkierung ausgesandt werden, die einem Anwender anzeigt, welcher Bereich einer gerade anvisierten Oberfläche hinsichtlich seiner Temperatur vermessen werden würde. Dazu besitzt das erfindungsgemäße Messgerät eine optische Markierungseinheit 22, die auf das Sichtfeld des Thermodetektors ausgerichtet ist.

Die optische Markierungseinheit 22 kann alternativ oder auch zusätzlich eine Kamera, insbesondere eine Digitalkamera, umfassen. Damit ist es dann möglich, dass der anvisierte Messbereich auf einem Display des Messgerätes darstellbar ist. Die Kamera, insbesondere eine Digitalkamera nimmt den erweiterten Messbereich der Oberflächen-Temperaturmessung auf. In dieses Kamerabild, welches über ein Display des Messgerätes wiedergegeben werden kann, kann dann auch der beispielsweise rechnerisch ermittelte genaue Messort der Temperaturmessung eingeblendet werden, um einem Anwender zu visualisieren, an welcher Stelle genau die Oberflächentemperatur gemessen wird.

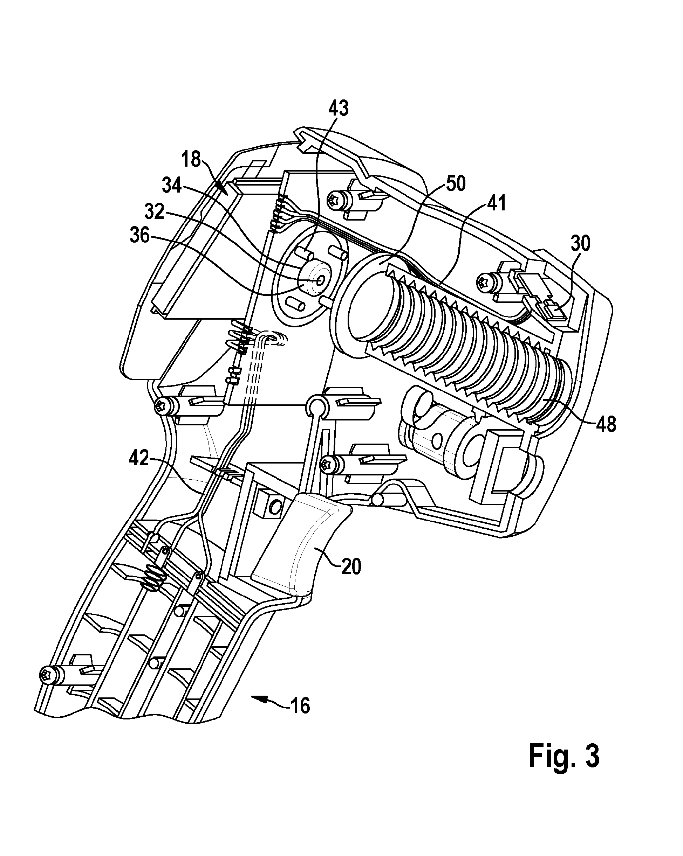

Im Messkopf 14 ist unter anderem ein, in Figur 1 nicht weiter dargestellter, Infrarotsensor 32 angeordnet (siehe hierzu insbesondere Figur 3), der die von einem Messobjekt emittierte und über ein Linsenelement gebündelte IR Strahlung detektiert.

Welche Wellenlängenbereich für die gewünschte Messung optimal ist, hängt prinzipiell vom zu messenden Material und seiner Temperatur ab. Für Temperaturen um die Raumtemperatur kommen Wellenlängen im mittleren Infrarot (MIR) in Frage.

Als Temperatursensor für die berührungslose Temperaturmessung kann hierbei beispielsweise ein Thermopile-Detektor genutzt werden.

Ein Thermopile oder auch Thermosäule ist ein Detektor für elektromagnetische Strahlung in einem weiten Wellenlängenbereich, welcher auf der Absorption der Strahlung und der Messung des entstehenden Wärmestromes entlang eines Wärmeleiters beruht. Grundbestandteil eines solchen Thermopiles ist ein Thermoelement, dessen eine Verbindungsstelle geschwärzt und bestrahlt, die andere vor der Bestrahlung geschützt wird. Meist werden mehrere solcher Elemente hintereinandergeschaltet, so dass die bestrahlten Stellen eine Fläche bilden. In diesem Fall bilden die Thermoelemente selbst den Wärmeleiter.

Andere Temperatursensoren, wie beispielsweise Photodioden, sind aber natürlich ebenso möglich.

Zur thermischen Stabilisierung ist das im Ausführungsbeispiel verwendete Thermopile-Element mechanisch an einen Tubus in Form eines Alu-Hohlzylinders gekoppelt, der zum Einen als Befestigungselement für Thermopile und weitere optische Elemente, wie beispielsweise eine Fokussierlinse dient, zum Anderen jedoch auch eine thermische Masse darstellt, um die Umgebungstemperatur des Thermopileelementes möglichst konstant zu halten (Siehe hierzu insbesondere Figur 3.) Der oben genannte thermische Kontakt führt zu einer Genauigkeitsverbesserung des Messgerätes im Fall von Temperaturwechseln, da vorteilhafterweise der Tubus thermisch mit dem Thermopile verbunden ist und damit das System Thermopile-Tubus-Linse schnell in ein thermisches Gleichgewicht bringt.

Man kann die Temperaturempfindlichkeit der Anordnung durch eine Strahlungskonzentration mit Hilfe einer IR-Linse steigern. Die Linse oder ein anstelle der Linse in das Gerät eingebrachtes refraktives oder diffraktives Fenster kann aus Glas, insbesondere einem Quarzglas bestehen.

Für den mittleren IR-Bereich ist es gegebenenfalls sinnvoll, die Linsen bzw. Fenster gegebenenfalls auch aus Kristallen wie Germanium, CaF2, ZnS, ZnSe, KRS5 oder auch aus Polyethylen (PE) oder Polypropylen (PP) auszubilden.

Die aufgesammelte IR-Strahlung wird detektiert und aus dieser wird die Oberflächentemperatur des Messobjekts bestimmt. Dazu besitzt das erfindungsgemäße Messgerät eine Rechen- und Auswerteinheit, um das Detektionssignal in einen Temperaturwert umzusetzen.

Der ermittelte Temperaturwert kann mittels einer Ausgabeeinheit, insbesondere eines Displays 18, welches auf der der Messrichtung abgewandten Seite des GeräteGehäuses 12 angeordnet ist, dargestellt werden.

Das Messgerät 10 weist einen zusätzlichen Temperatursensor 30 zur Bestimmung der Umgebungstemperatur Tu auf (Siehe auch Figur 3). Der Umgebungstemperatursensor 30 ist in einem separaten Extra-Gehäuse 26 angeordnet, welches weitgehend thermisch vom Gerätegehäuse 12 getrennt ist.

Vorteilhaft ist dabei die reduzierte Wechselwirkung zwischen dem Umgebungstemperatursensor 30 und thermischen Störgrößen, bei gleichzeitig gutem Schutz der Sensorik gegenüber äußeren Einflüssen, wie beispielsweise einem Sturz oder Stoß. Dazu wird im vorliegenden Messgerät auf ein exponiertes Gehäuseteil für die Umgebungstemperatursensorik verzichtet.

Dies bedeutet insbesondere auch die Verwendung einer geringen thermischen Masse für die Leiterplatte (PCB), auf welcher der Sensor 30 für die Umgebungstemperatur aufgebracht ist. So wird beispielsweise eine Leiterplatte verwendet, die in ihren geometrischen Maßen, die geometrischen Maße des Sensors nur geringfügig übertrifft.

Weiterhin ist die Leiterplatte für den Umgebungssensor inkl. Sensor bestmöglich vom Hauptgehäuse des Messgerätes mechanisch und thermisch zu entkoppeln. Dies wird erreicht, indem die Leiterplatte (PCB) inkl. Sensor in einem Extra-Gehäuse 26 für den Umgebungstemperatursensor eingebracht wird, welches wiederum bestmöglich vom Hauptgehäuse 12 thermisch entkoppelt wird, indem die Anzahl der Berührungspunkte zwischen beiden Gehäusen sowie deren überlappende Flächen möglichst gering ausgeführt wird.

Dazu sind bei dem erfindungsgemäßen Messgerät Mittel 28 vorgesehen, die es gewährleisten, dass das Extra-Gehäuse 26 vom Gehäuse 12 der Vorrichtung thermisch entkoppelt ist.

So kann zur thermischen Entkopplung das Extra-Gehäuse 26 für den zusätzlichen Umgebungstemperatursensor 30 lediglich über kleine Stege bzw. Beinchen 28 mit dem Hauptgehäuse 12 des Messgerätes verbunden sein.

Die Stege 28 zur Befestigung des Extra-Gehäuses 26 im Gerätegehäuse 12 können einstückig mit dem Extra-Gehäuse 26 verbunden sind. Alternativerweise könnten die Stege bzw. Beinchen zur Befestigung des Extra-Gehäuses 26 im Gerätegehäuse 12 einstückig mit dem Geräte-Gehäuse 12 verbunden sind.

In vorteilhafter Weise ist das Extra-Gehäuse 26 des Umgebungstemperatursensors 30 dabei an zumindest drei, insbesondere vier Seiten von dem Gerätegehäuse 12 umgeben und passt sich dabei insbesondere der Kontur des Messkopfs des erfindungsgemäßen Messgerätes an.

Das Extra-Gehäuse 26 ist dabei weitgehend offen ausgebildet, um einen direkten Austausch mit der Umgebungsluft zu realisieren. Das Extra-Gehäuse 26 ist insbesondere an seiner nach außen gewandten Oberfläche weitgehend geöffnet bzw. besitzt lediglich ein schützende Gitter oder Streifenstruktur.

Vorteilhaft ist es auch möglich, dass das Material des Extra-Gehäuses 26 unterschiedlich zum Material des Gerätegehäuses 12 ausgebildet ist. So kann das Extra-Gehäuse 26 als ein Metallgehäuse ausgebildet sein.

Das Extra-Gehäuse 26 für den Umgebungstemperatursensor 30 ist dabei aber in die Gehäusekontur des Messgehäuses 12 des Gerätes integriert, so dass keinerlei hervorstehende Ecken oder kannten bei einem Fall oder Stoß des Messgerätes aufgrund ihrer exponierten Position beschädigt werden können.

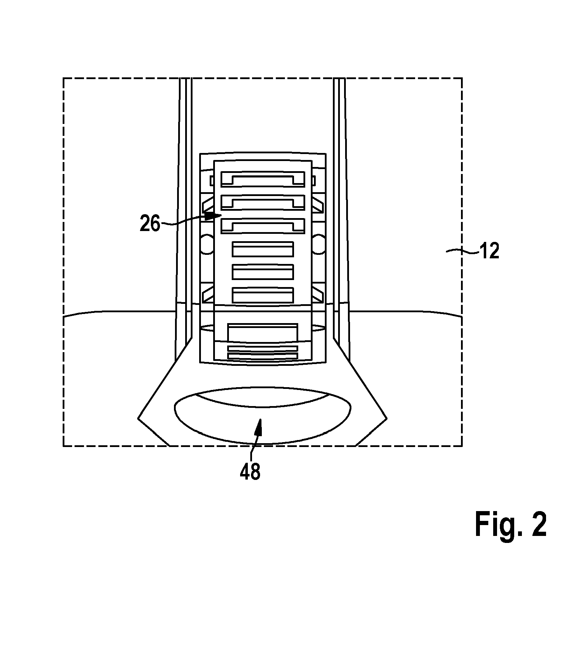

Figur 2 zeigt in einer Ausschnittsdarstellung die Anordnung des Umgebungstemperaturgehäuses 26 im Messkopf 14 des erfindungsgemäßen Messgerätes.

Figur 3 zeigt ein geöffnetes erfindungsgemäßes Messgerät, insbesondere den Messkopf eines solchen Messgerätes, zur weiteren Verdeutlichung des mechanischen, elektrischen und thermischen Aufbaus eines möglichen Messkopfs des erfindungsgemäßen Messgerätes.

Neben dem Umgebungstemperatursensor 30, ist insbesondere ein Infrarotsensor 32 zur berührungslosen Objekttemperaturmessung im Gehäuse des Messgerätes 10 vorgesehen. Im Ausführungsbeispiel der Figur 3 ist der Infrarottemperatursenor 30 als ein Thermopile-Detektor zur berührungslosen Objekttemperaturmessung ausgebildet. Der Aufbau und die Funktionsweise derartiger Detektoren sind bekannt und brauchen daher an dieser Stelle nicht weiter dargelegt zu werden.

Der Infrarotsensor 32 ist, ebenso wie der Umgebungstemperaursensor 30, über elektrische Verbindungsmittel 41 mit einer Rechen - und Auswerteinheit des Messgerätes verbunden, die sich insbesondere auf der Rückseite einer als Trägerelement für den Infrarotsensor ausgebildeten Leiterplatte 40 befindet. Diese Leiterplatte 42 und damit auch die nachgeschaltete Elektronik des Messgerätes werden über eine geräteinterne Energieversorgung und entsprechende Verbindungsmittel 42 mit elektrischer Energie versorgt. Als Energiequelle können hier Batterien, wiederaufladbare Batterien oder auch Akku-Systeme verwendet werden. Besonders vorteilhaft bietet sich die Verwendung von Lithium Ionen Akkus mit standardisierter Ausgabespannung an. So kann das erfindungsgemäße Messgerät beispielsweise mit einem 3,6V oder einem 7,2V oder einem 10,8V Akku-System betrieben werden. Das jeweilige Energiespeichermedium kann fest im Gehäuse des Messgerätes, insbesondere im Inneren des Handgriffs 16 installiert sein, oder wie in der Ausführungsform der Figurenwechselbar sein. Besonders vorteilhaft sind hierbei Wechselakkus, die sich in den Handgriff 16 des Messgerätes einschieben, bzw. aus diesem herausnehmen lassen.

Zur Überwachung der Temperatur des Infrarotsensors 32 und/oder seiner unmittelbaren Umgebung ist zumindest ein weiterer Temperatursensor 34 vorgesehen.

Der weitere Temperatursensor 34 ist in direkter Nähe des Infrarotsensors angebracht und ermöglicht es, die Temperatur des Infrarotsensors bzw. dessen unmittelbare Umgebungstemperatur zu bestimmen. Der Infrarotsensor 32 und der weitere Temperatursensor 34 befinden im Ausführungsbeispiel der Figur 3 vorteilhafter Weise in einem Gehäuse. Diese Gehäuse könnte beispielsweise ein, in Figur 3 der Übersicht halber entfernter Tubus 44 sein. In Figur 3 sind lediglich dessen Befestigungselemente 43 sichtbar. Ein solcher Tubus kann in vorteilhafter Weise aus einem Metall, beispielsweise Aluminium gefertigt sein und stellt dann eine nicht zu vernachlässigende thermische Masse dar. Zur thermischen Stabilisierung kann der erfindungsgemäß verwendete Infrarot-Sensor mechanisch an einen solchen Tubus in Form eines Hohlzylinders gekoppelt sein. Dies ermöglicht es, die Umgebungstemperatur des Infrarotsensors 32 möglichst konstant zu halten. Der oben genannte thermische Kontakt führt zu einer Genauigkeitsverbesserung des Messgerätes im Fall von Temperaturwechseln, da vorteilhafterweise der Tubus 44 thermisch mit dem Infrarotsensor/ Thermopile 32 verbunden ist und damit das System Infrarotsensor/Thermopile-Tubus schnell in ein thermisches Gleichgewicht bringt. Die Länge des Tubus kann dabei vorteilhafter Weise auf den Abstand von Infrarotsensor/Thermopile 32 zu IR-Linse begrenzt werden, wodurch oben erwähnte Eigenschaften weiterhin gewährleistet sind, als Apertur und Träger des optischen Systems jedoch ein Kunststoffteil genutzt werden kann, was zu deutlichen Kostenersparnissen führt. In Figur 3 ist ein solches Trägerelement 48 für das optische System sowie die zugehörige Halterung 50 für eine IR-Linse dargestellt.

Sind der Infrarotsensor 32 und der weitere Temperatursensor 34 in einem Gehäuse, insbesondere in den Metalltubus 44 angeordnet, so kann der weitere Temperatursensor 34 vorteilhaft als ein Kontakttemperatursensor ausgebildet sein, der im direkten thermischen Kontakt mit dem Infrarotsensor 32, dessen Gehäuse 36 oder auch der thermischen Masse 44 steht.

Im Ausführungsbeispiel der Figur 3 ist der weitere Temperatursensor 34 direkt in dem Gehäuse 36 des Infrarottemperatursensors vorgesehen, und als Kontaktsensor ausgebildet, um die Temperatur des Infrarotsensors, im Ausführungsbeispiel die Temperatur des Thermopiledetektors möglichst exakt zu bestimmen. Das Gehäuse 36 des Infrarotsensors steht dann wiederum im thermischen Kontakt mit dem Metallinsbesondere Aluminium-Tubus, der als ausgleichende thermische Masse dient und im Fall von Temperaturwechseln das System Infrarotsensor/Thermopile -Tubus schnell in ein thermisches Gleichgewicht bringt.

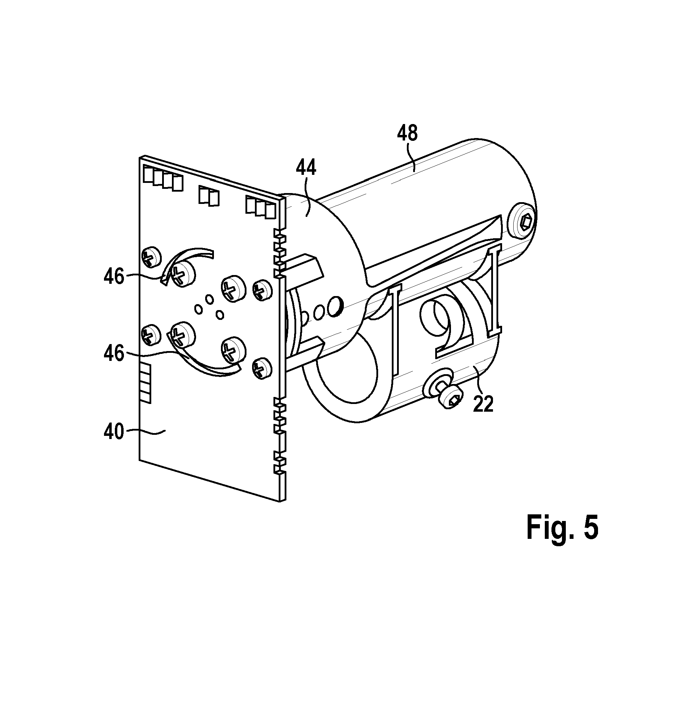

Eine weitere passive Verbesserung der Messgenauigkeit des Systems kann dadurch erzielt werden, dass möglichst alle geräteinternen Wärmequellen (z.B. sich elektrisch erwärmende Bauteile) und mechanischen Störquellen (z.B. Auslöseschalter und/oderTasten einer Bedieneinheit) vom Infrarotsensor/Thermopile selbst entkoppelt werden. Dies kann durch den Einsatz von mehreren Leiterplatten die mittels elektrischer Verbindung angebunden sind oder auch durch Nuten 46 in der Leiterplatte 44 realisiert werden, wie dies in Figur 5 dargestellt.

Darüber hinaus werden Temperaturwechsel des Infrarotsensors im erfindungsgemäßen Messgerät bzw. dem zugrunde liegenden Verfahren aber auch mittels eines Algorithmus berücksichtigt. Ändert sich die Umgebungstemperatur des Infrarotsensors 32, so wird diese Information von dem weiteren Sensor 34 erkannt, so dass der vom Infrarotsensor 32 gemessene Objekttemperaturwert gegebenenfalls angepasst, insbesondere rechnerisch angepasst werden kann. Dieses Korrekturverfahren kann jedoch nur greifen, wenn das gesamte Messsystem auf einem Temperaturpotenzial liegt, die Temperatur des Infrarotsensors Ts demnach gleich der Umgebungstemperatur Tu ist - das Messgerät also komplett *"akklimatisiert"* ist.

Dies bedeutet alle relevanten Komponenten (Linse, Tubus, IR-Gehäuse) haben das gleiche thermische Potenzial. Es wird beim Thermopile daher keine Signaländerung erzeugt, außer das zu vermessende Objekt hat eine von Ts bzw. Tu unterschiedliche Temperatur.

Wird das Gerät jedoch einer thermischen Veränderung unterworfen (z.B. wurde das Gerät im Winter aus einem kalten Auto in den wesentlich wärmeres Gebäude gebracht) Das Thermopile benötigt länger als die restlichen relevanten Komponenten, um Tu zu erreichen.

Wird das Gerät jedoch einer thermischen Veränderung unterworfen (z.B. wurde das Gerät im Winter aus einem kalten Auto in den wesentlich wärmeres Gebäude gebracht), so befindet sich das Messgerät typischerweise noch in einem Zustand der Akklimatisierung, da das Thermopile länger als die restlichen relevanten Komponenten benötigt, um die Umgebungstemperatur Tu zu erreichen. Ts ist dann typischerweise von Tu unterschiedlich. Es besteht zwischen dem Infrarotsensor (Ts), inklusive des weiteren Sensors 34 und wesentlichen Komponenten des Messgerätes, wie beispielsweise einem IR-Gehäuse oder der IR-Linse ein Temperaturunterschied ($\Delta T = Ts-Tu$) so dass zwischen dem Infrarotsensor 32 und restlichem Gehäuse ein Temperaturgradient vorliegt. Dies führt zu einer Messsignaländerung am Thermopile unabhängig von der Temperatur $T_{Ob}$ des zu vermessenden Objektes.

Der Infrarotsensor 32 geht durch den Messwert des beispielsweise als Temperaturkontaktsensors ausgebildeten, weiteren Sensors 34, der in seiner unmittelbaren Nähe angeordnet ist, jedoch von einer Umgebungstemperatur Tu=Tu1=Ts aus. Das IR-Gehäuse und die Linse haben jedoch tatsächlich eine von Ts=Tu1 verschiedene Umgebungstemperatur Tu=Tu2. Dies kann zu erheblichen Fehlmessungen während des Betriebes des berührungslosen Temperaturmessgerätes führen.

Erfindungsgemäß ist zum Detektieren einer möglichen Temperaturdifferenz zwischen Infrarotsensor/Thermopile (32) und den restlichen Komponenten des Messgerätes, bzw. der Umgebung des Messgerätes der mindestens eine weiterer Umgebungstemperatursensor 30 in der Art und Weise im oder am Messgerät vorgesehen, dass dieser den Temperaturunterschied ($\Delta T = Ts-Tu$) bestmöglich detektieren kann. Dazu dient insbesondere die oben beschriebene thermische Entkopplung des zumindest einen weiteren Temperatursensors 30 vom Messgerätegehäuse.

Bei dem erfindungsgemäßen Messgerät gibt es demnach zumindest 3 Temperatursensoren. Den eigentlichen Sensor zur berührungslosen Temperaturmessung 32(=Infrarotsensor), zumindest einen Temperatursensor 34 zur Bestimmung der Temperatur des Infrarotsensors und einen Sensor 30 zur Bestimmung der Umgebungstemperatur.

Wie in den Figuren 1 bis 3 zu erkennen ist, ist der weitere Temperatursensor 30 zur Bestimmung der Umgebungstemperatur in einem speziellen Gehäuse untergebracht, welches vom Hauptgehäuse des Messgerätes thermisch entkoppelt ist. Dieser Sensor misst die Umgebungstemperatur Tu. Gleichzeitig wird die Temperatur Ts des Infrarotsensors/Thermopiles gemessen. Weichen diese beiden Temperaturen voneinander ab ($\Delta T =Ts-Tu \neq 0$) ist das Messgerät nicht komplett akklimatisiert. In einem solchen Fall kann ein Anwender auf die Gefahr einer möglichen Fehlmessung durch ein entsprechendes akustisches oder optisches Hinweissignal hingewiesen werden. Beispielsweise kann ein entsprechender *Hinweis "Gerät nicht akklimatisiert" auf* einem Display 18 des Messgerätes 10 wiedergegeben werden.

Zur Wiedergabe von Messergebnissen und beispielsweise auch eines Hinweises, dass das Gerät noch nicht akklimatisiert, und daher gegebenenfalls fehlerbehaftet ist, weist das erfindungsgemäße Messgerät 10 zumindest eine Ausgabeeinheit 18, insbesondere ein Display auf, auf dem beispielsweise die gemessenen Temperaturwerte oder Differenzen angezeigt werden können.

Darüber hinaus kann das Gerät 10 auch über zusätzliches LEDs verfügen, die geeignet sind codierte Farbsignale auszugeben. Diese LEDs sind vorteilhafter Weise ebenfalls im Bereich des Displays 18 angeordnet.

Alternativerweise kann anstelle der LEDs auch eine farblich unterschiedliche Hintergrundbeleuchtung des Displays verwendet werden, um verschiedene Temperaturinformationen einem Anwender zu übermitteln.

Auch die Möglichkeit einer Korrektur des von Infrarotsensors gemessenen Objekttemperatur besteht erfindungsgemäß, indem ein Algorithmus verwendet wird, welcher die Differenz von Ts zu Tu in die Messung der Objekttemperatur mit einbezieht. Auch die Verwendung mehrerer zusätzlicher Temperatursensoren 34 im Messgerät kann vorteilhaft sein, um den Temperaturgradienten zwischen dem Infrarotsensor und der Umgebungstemperatur exakt zu fassen und den daraus resultierenden Messfehler mit gewünschter Genauigkeit zu bestimmen.

Das erfindungsgemäße Messgerät 10 kann über verschiedene Messmodi verfügen, von denen das erfindungsgemäße Verfahren lediglich eines ist. So kann das erfindungsgemäße Messgerät beispielsweise in einem Messmodus 1 die Oberflächentemperatur von Wänden und Objekten, beispielsweise Heizkörpern, mit einer Messgenauigkeit von beispielsweise $\pm$ 1 Grad messen.

Dadurch kann zum Beispiel festgestellt werden, ob Heizkörper richtig arbeiten. Die genauen Werte lassen sich auf dem beleuchten Display schnell und einfach ablesen.

Nachfolgend wird das hierzu entwickelte, erfindungsgemäße Verfahren näher beschrieben.

Das erfindungsgemäße Verfahren zur berührungslosen Temperaturmessung verwendet einen IR-Sensor, wie beispielsweise ein Thermopile zur berührungslosen Messung einer Objekttemperatur. Zur Vermeidung von Fehlmessungen ist in direkter Nähe des Thermopiles ein Temperatursensor, insbesondere ein Kontakttemperatursensor angebracht. Ändert sich die Umgebungstemperatur Ts des IR-Sensors wird diese Information vom Kontakttemperatursensor erkannt und der Messwert des Thermopiles angepasst.

Dieses Korrekturverfahren kann jedoch nur greifen, wenn das gesamte System auf einem Temperaturpotenzial liegt (d.h. Ts = Tu). Die Temperatur im Messgerät, und insbesondere die Temperatur des IR-Sensors ist in diesem Fall gleich der Umgebungstemperatur Tu des zu vermessenden Objektes, d.h. das Messgerät ist komplett akklimatisiert. Deshalb ist es ratsam, vor einer Messung zu warten, bis das Gerät komplett akklimatisiert ist.

Ist diese Bedingung jedoch noch nicht erfüllt, besteht also zwischen dem Thermopile inkl. Kontakttemperatursensor und dem Gehäuse des Messgerätes mit wesentlichen Komponenten (IR-Gehäuse, Linse) des Messsystems ein Temperaturunterschied ($\Delta T$ = Ts-Tu $\neq 0$). Das Thermopile geht jedoch durch den Messwert Ts des Temperaturkontaktsensors in seiner Nähe von einer Umgebungstemperatur Tu1=Ts aus. Das IR-Gehäuse und die Linse haben jedoch unter Umständen eine von Ts deutlich verschiedene Umgebungstemperatur Tu=Tu2.

Bei dem erfindungsgemäßen Verfahren werden also die Temperatur des Thermopiles und die Umgebungstemperatur des Messgerätes gemessen. Weichen diese beiden Temperaturen voneinander ab ist das Gerät nicht komplett akklimatisiert. Der Anwender kann vorteilhafter Weise auf die Gefahr einer möglichen Fehlmessung hingewiesen werden (beispielsweise durch einen entsprechenden Hinweis auf dem Display des ausführenden Messgerätes).

Erfindungsgemäß besteht auch die Möglichkeit einer Korrektur des vom IR-Sensor gemessenen Temperaturwertes. Hierbei wird vorteilhaft ein Algorithmus verwendet, welcher die Differenz von Ts zu Tu in die IR-Messung der Objekttemperatur mit einbezieht.

Der dem erfindungsgemäßen Verfahren zugrunde liegende Anpassungsalgorithmus kann eine einfache *"Rise function"* (Sättigungsfunktion), bzw. *"Decay function"* (Abklingfunktion beinhalten. Je nachdem, ob Ts > Tu oder Tu < Ts kann die Entwicklung der Temperatur Ts über der Zeit mit einer entsprechenden Funktion simuliert und berücksichtigt werden.

- Decay function $T_{amb(t)} = (T_{amb\_Start} - T_{amb\_Ende})* e_{-t/T} + T_{amb\_Ende}$

- Rise function $T_{amb(t)} = (T_{amb\_End} - T_{amb\_Start})* (1-e_{-t/T}) + T_{amb\_Start}$

Über dieses Temperaturverhalten kann einem Anwender beispielsweise auch die noch verbleidende Zeit bis zur Akklimatisierung des Gerätes mitgeteilt werden. In einem solchen Fall ist es beispielweise möglich, keinen Messwert für die Temperatur des zu messenden Objektes auszugeben, sondern einen entsprechend Hinweis, dass eine weitere Akklimatisierung des Messgerätes erforderlich ist, da der Temperaturunterschied $\Delta T = T_S - T_U$ zu groß ist.

Je nach Beschaffenheit des Messwerkzeugs kann eine weitergehende Anpassung/Modifikation des Algorithmus sinnvoll und/oder notwendig sein.

Auch die Verwendung mehrerer Temperatursensoren zur Bestimmung von Umgebungstemperaturwerten $T_{ui}$ kann eventuell notwendig oder hilfreich sein, um den Gradienten im Messgerät und den daraus resultierenden Messfehler ausreichend zu bestimmen.

In einem weiteren Mess-Modus 2 kann das erfindungsgemäße Messgerät beispielsweise auch eine Raum- und Oberflächentemperatur messen, die Werte in Relation setzen, die Daten interpretieren und auf diese Weise Wärmebrücken detektieren. Das Ergebnis kann per LED angezeigt werden. Die exakten Messwerte lassen sich auf dem Display ablesen.

In einem Mess-Modus 3 kann der Thermodetektor auch zusätzlich zur Raum- und Oberflächentemperatur die Luftfeuchtigkeit messen. Anhand dieser drei Werte ist es dann auch möglich, schimmelgefährdete Stellen in einem Haus zu definieren bzw. zu detektieren. Besteht akute Schimmel-Gefahr, so kann das Gerät mit roter LED oder beispielsweise auch akustisch warnen. Auch in diesem Messmodus können die exakten Messergebnisse in einem Display ablesbar sein.

Das erfindungsgemäße Messgerät misst entsprechend dem gewählten Mess-Modus die Raumtemperatur, die Oberflächentemperatur von Wänden und Objekten oder auch die relative Luftfeuchtigkeit. Temperaturen werden dabei insbesondere nach dem erfindungsgemäßen Verfahren gemessen. Das erfindungsgemäße Verfahren ist jedoch nicht auf die oben beschriebenen Temperaturmessungen beschränkt.

Das erfindungsgemäße Messgerät und das Verfahren zur berührungslosen Messung von Objekttemperaturen sind nicht auf die in der Beschreibung vorgestellten konkreten Ausführungsformen beschränkt. Diese zeigen lediglich eine Möglichkeit der Realisierung eines erfindungsgemäßen Messgerätes bzw. des erfindungsgemäßen Verfahrens.

## Patentansprüche

1. Messgerät zur berührungslosen Temperaturmessung eines Objektes, insbesondere ein handgehaltenes Infrarotmessgerät, mit einem Gerätegehäuse (12), und einem im Gerätegehäuse (12) angeordneten Infrarotsensor (32) zur berührungslosen Temperaturmessung, sowie mit einem zusätzlichen Umgebungstemperatursensor (30) zur Bestimmung der Umgebungstemperatur Tu des Messgerätes, **dadurch gekennzeichnet, dass** zumindest ein weiterer Temperatursensor (34) im Gerätegehäuse (12) des Messgerätes angeordnet ist.

2. Messgerät nach Anspruch 1, **dadurch gekennzeichnet, dass** der zumindest eine weitere Temperatursensor (34) in unmittelbarer Nähe des Infrarotsensors (32) angebracht ist.

3. Messgerät nach Anspruch 1 oder 2, **dadurch gekennzeichnet, dass** der zumindest eine weitere Temperatursensor (34) als Kontakttemperatursensor ausgebildet ist.

4. Messgerät nach zumindest einem der vorhergehenden Ansprüche, **dadurch gekennzeichnet, dass** der zumindest eine weitere Temperatursensor (34) in einem Gehäuse mit dem Infrarotsensor (32), insbesondere in dem Gehäuse (36) des Infrarotsensors (32), angeordnet ist.

5. Messgerät nach zumindest einem der vorhergehenden Ansprüche, **dadurch gekennzeichnet, dass** der eine weitere Temperatursensor (34) dazu eingerichtet ist, die Temperatur Ts des Infrarotsensors (32) zu detektieren

6. Messgerät nach zumindest einem der vorhergehenden Ansprüche, insbesondere nach Anspruch **4, dadurch gekennzeichnet, dass** das Gehäuse (36) des Infrarotsensor (32) in oder an einem Gehäuse (38) innerhalb des Gerätegehäuses (12) angeordnet sind, wobei dieses Gehäuse (38) eine thermische Masse für den Infrarotsensor (32) bildet.

7. Messgerät nach zumindest einem der vorhergehenden Ansprüche, **dadurch gekennzeichnet, dass** der Infrarotsensors (32) eine Thermopile-Detektor ist

8. Messgerät nach zumindest einem der vorhergehenden Ansprüche, **dadurch gekennzeichnet, dass** Mittel vorge-sehen sind, eine Temperaturdifferenz ∆T (∆T = Ts-Tu) zwischen dem mindestens einen weiteren Temperatursensor (34) und dem Umgebungstemperatursensor (30), zu detektieren.

9. Messgerät nach zumindest eine der vorhergehenden Ansprüche, **dadurch gekennzeichnet, dass** diese Mittel es ermöglichen, ein von der Temperaturdifferenz ∆T abhängiges Signal zu erzeugen.

10. Messgerät nach zumindest einem der vorhergehenden Ansprüche 8 oder 9, **dadurch gekennzeichnet, dass** Ausgabemittel vorgesehen sind, die es erlauben, ein von der Temperaturdifferenz ∆T abhängiges Hinweissignal aus-zugeben, insbesondere optisch oder akustisch auszugeben.

11. Messgerät nach zumindest einem der vorhergehenden Ansprüche, **dadurch gekennzeichnet, dass** der Umgebungstemperatursensor (32) thermisch von dem Gehäuse (12) zur berührungslosen Temperaturmessung entkoppelt ist.

**12.** Messgerät nach Anspruch 11, **dadurch gekennzeichnet, dass** der Umgebungstemperatursensor (32) in einem Extra-Gehäuse (26) des Messgerätes (10) positioniert ist.

**13.** Messgerät nach Anspruch 11, **dadurch gekennzeichnet, dass** Mittel (28) vorgesehen sind, die es gewährleisten, dass das Extra-Gehäuse (26) des Umgebungstemperatursensor (32) vom Gehäuse (12) des Messgerätes (10) thermisch entkoppelt ist.

**14.** Verfahren zur berührungslosen Temperaturmessung, bei dem mittels eines IR-Sensors (32) berührungslos eine Objekttemperatur $T_{Ob}$ bestimmt wird, wobei über einen weiteren Temperatursensor (34) die Temperatur Ts des IR-Sensors (32) detektiert wird, **dadurch gekennzeichnet, dass** ein dritter Temperatursensor eine Umgebungstemperatur Tu misst.

**15.** Verfahren zur berührungslosen Temperaturmessung nach Anspruch 14, **dadurch gekennzeichnet, dass** eine Temperaturabweichung ∆T = Ts-Tu zwischen der Temperatur (Ts) des IR-Sensors (32) und Umgebungstemperatur (Tu) detektiert wird.

**16.** Verfahren zur berührungslosen Temperaturmessung nach Anspruch 14 oder 15, **dadurch gekennzeichnet, dass** bei einer Temperaturabweichung ∆T = Ts-Tu ≠0 zwischen Infrarotsensor-Temperatur (Ts) und Umgebungstemperatur (Tu), die von dem IR-Sensor (32) gemessene Objekttemperatur $T_{Ob}$ korrigiert wird.

**17.** Verfahren zur berührungslosen Temperaturmessung nach zumindest einem der vorhergehenden Ansprüche 14 bis 16, **dadurch gekennzeichnet, dass** bei einer Temperaturabweichung ∆T = Ts-Tu ≠ 0 zwischen Infrarotsensor-Temperatur (Ts) und Umgebungstemperatur (Tu), die von dem IR-Sensor (32) gemessene Objekttemperatur $T_{Ob}$ mittels eines Algorithmus korrigiert wird, der die Temperaturabweichung ∆T = Ts-Tu von Infrarotsensor-Temperatur (Ts) und Umgebungstemperatur (Tu) berücksichtigt.

**18.** Verfahren zur berührungslosen Temperaturmessung nach zumindest einem der vorhergehenden Ansprüche 14 bis 17, **dadurch gekennzeichnet, dass** bei einer Abweichung ∆T = Ts-Tu ≠ 0 der Temperatur des IR-Sensors (Ts) von der Umgebungstemperatur (Tu), ein Hinweissignal ausgegeben wird, insbesondere optisch oder akustisch ausgegeben wird.

**19.** Verfahren nach Anspruch 18, **dadurch gekennzeichnet, dass** in Abhängigkeit von der Größe der gemessene Temperaturdifferenz ∆T = Ts-Tu ≠ 0 ein kodiertes Farbsignal ausgegeben wird.

**20.** Verfahren nach Anspruch 18, **dadurch gekennzeichnet, dass** bei einer Abweichung ∆T = Ts-Tu ≠ 0 der Temperatur des IR-Sensors (Ts) von der Umgebungstemperatur (Tu), kein Temperaturmesswert ausgegeben wird, sondern ein Hinweis auf die notwendige weitere Akklimatisierung des Gerätes.

**21.** Verfahren zur berührungslosen Temperaturmessung nach zumindest einem der vorhergehenden Ansprüche 14 bis 20, **dadurch gekennzeichnet, dass** bei einer Abweichung ∆T = Ts-Tu ≠ 0 der Temperatur des IR-Sensors (Ts) von der Umgebungstemperatur (Tu), dem Anwender die noch benötigte Zeit für die Akklimatisierung des Gerätes angegeben wird.

**Fig. 1**

Fig. 2

**Fig. 3**

40

38,44

48

26

18

42

22

16

Fig. 4

Fig. 5

EP 2 706 330 A1

Europäisches Patentamt
European Patent Office
Office européen des brevets

**EUROPÄISCHER RECHERCHENBERICHT**

Nummer der Anmeldung

EP 13 17 5114

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 20 2005 015397 U1 (TESTO AG [DE]) 8. Februar 2007 (2007-02-08) * Zusammenfassung; Abbildung 1 * | 1-21 | INV. G01J5/00 G01J5/02 G01J5/04 |
| Y | US 6 647 350 B1 (PALFENIER RONALD A [US] ET AL) 11. November 2003 (2003-11-11) * Spalte 5, Zeile 42 - Spalte 6, Zeile 6; Abbildungen 1,2 * * Spalte 18, Zeile 31 - Zeile 40 * | 1-21 | G01J5/08 G01J5/06 |
| Y | EP 1 055 391 A1 (CITIZEN WATCH CO LTD [JP]) 29. November 2000 (2000-11-29) * Absätze [0064], [0071]; Abbildungen 3,5,8 * | 1-21 | |
| Y | US 4 456 390 A (JUNKERT KENNETH G [US] ET AL) 26. Juni 1984 (1984-06-26) * Spalte 1, Zeilen 35-41; Abbildung 2 * | 2,4,5,7 | |
| Y | EP 1 847 820 A2 (COVIDIEN AG [CH]) 24. Oktober 2007 (2007-10-24) * Absatz [0025]; Abbildung 3 * | 2,5 | RECHERCHIERTE SACHGEBIETE (IPC) |
| Y | EP 1 123 685 A1 (OMRON TATEISI ELECTRONICS CO [JP] OMRON HEALTHCARE CO LTD [JP]) 16. August 2001 (2001-08-16) * Absatz [0031] - Absatz [0032] * | 10,18-21 | G01J |
| Y | US 2008/267254 A1 (HSIEH CHIH-WEI [TW]) 30. Oktober 2008 (2008-10-30) * Absatz [0023] * | 10,18-21 | |
| Y | US 2008/259993 A1 (BLAKELEY GERALD W [US]) 23. Oktober 2008 (2008-10-23) * Zusammenfassung; Abbildung 1 * | 11-13 | |

Der vorliegende Recherchenbericht wurde für alle Patentansprüche erstellt

| Recherchenort | Abschlußdatum der Recherche | Prüfer |
|---|---|---|
| München | 24. Oktober 2013 | Schmidt, Charlotte |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 13 17 5114

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2013

| Im Recherchenbericht angeführtes Patentdokument | Datum der Veröffentlichung | Mitglied(er) der Patentfamilie | Datum der Veröffentlichung |
|---|---|---|---|
| DE 202005015397 U1 | 08-02-2007 | DE 202005015397 U1 | 08-02-2007 |
| | | DE 202006020449 U1 | 18-09-2008 |
| | | US 2009304041 A1 | 10-12-2009 |
| | | WO 2007036353 A2 | 05-04-2007 |
| US 6647350 B1 | 11-11-2003 | US 6647350 B1 | 11-11-2003 |
| | | US 6862549 B1 | 01-03-2005 |
| EP 1055391 A1 | 29-11-2000 | CN 1297342 A | 30-05-2001 |
| | | DE 69929710 T2 | 21-09-2006 |
| | | EP 1055391 A1 | 29-11-2000 |
| | | HK 1037503 A1 | 27-05-2005 |
| | | JP 4478337 B2 | 09-06-2010 |
| | | US 6572264 B1 | 03-06-2003 |
| | | WO 0035339 A1 | 22-06-2000 |
| US 4456390 A | 26-06-1984 | DE 3239194 A1 | 05-05-1983 |
| | | GB 2107862 A | 05-05-1983 |
| | | JP S58131524 A | 05-08-1983 |
| | | US 4456390 A | 26-06-1984 |
| EP 1847820 A2 | 24-10-2007 | AT 533036 T | 15-11-2011 |
| | | AU 2007201761 A1 | 08-11-2007 |
| | | BR PI0701281 A2 | 02-12-2008 |
| | | CA 2584742 A1 | 21-10-2007 |
| | | CN 101059371 A | 24-10-2007 |
| | | CN 101793561 A | 04-08-2010 |
| | | DK 1906160 T3 | 06-02-2012 |
| | | EP 1847820 A2 | 24-10-2007 |
| | | EP 1906160 A1 | 02-04-2008 |
| | | EP 2261619 A2 | 15-12-2010 |
| | | ES 2374099 T3 | 13-02-2012 |
| | | HK 1108294 A1 | 25-03-2011 |
| | | JP 2007301356 A | 22-11-2007 |
| | | KR 20070104278 A | 25-10-2007 |
| | | US 2007248141 A1 | 25-10-2007 |
| | | US 2008089387 A1 | 17-04-2008 |
| | | US 2009185598 A1 | 23-07-2009 |
| EP 1123685 A1 | 16-08-2001 | AT 348565 T | 15-01-2007 |
| | | AT 362614 T | 15-06-2007 |
| | | CN 1323179 A | 21-11-2001 |
| | | CN 1557251 A | 29-12-2004 |
| | | CN 1615793 A | 18-05-2005 |
| | | DE 69934508 T2 | 27-09-2007 |
| | | DE 69936108 T2 | 14-02-2008 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**   EP 13 17 5114

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2013

| Im Recherchenbericht angeführtes Patentdokument | Datum der Veröffentlichung | Mitglied(er) der Patentfamilie | Datum der Veröffentlichung |
|---|---|---|---|
| | | EP 1123685 A1 | 16-08-2001 |
| | | EP 1521070 A1 | 06-04-2005 |
| | | JP 3646652 B2 | 11-05-2005 |
| | | US 6513970 B1 | 04-02-2003 |
| | | WO 0022978 A1 | 27-04-2000 |
| US 2008267254 A1 | 30-10-2008 | FR 2915571 A1 | 31-10-2008 |
| | | JP 2008275574 A | 13-11-2008 |
| | | TW 200841859 A | 01-11-2008 |
| | | US 2008267254 A1 | 30-10-2008 |
| US 2008259993 A1 | 23-10-2008 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005015397 U1